(19) **Europäisches Patentamt**
**European Patent Office**
**Office européen des brevets**

(11) **EP 2 210 715 A2**

(12) **EUROPÄISCHE PATENTANMELDUNG**

(43) Veröffentlichungstag:
**28.07.2010 Patentblatt 2010/30**

(51) Int Cl.:
**B25J 9/16** (2006.01)

(21) Anmeldenummer: **09015255.4**

(22) Anmeldetag: **09.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **21.01.2009 DE 102009005495**

(71) Anmelder: **KUKA Roboter GmbH**
**86165 Augsburg (DE)**

(72) Erfinder: **Mittmann, Ralf**
**86415 Mering (DE)**

(74) Vertreter: **Schlotter, Alexander Carolus Paul et al**
**Wallinger Ricker Schlotter Foerstl**
**Patent- und Rechtsanwälte**
**Zweibrückenstrasse 5-7**
**80331 München (DE)**

(54) **Manipulatorsystem und Verfahren zur Kompensation einer kinematischen Abweichung eines Manipulatorsystems**

(57) Einerfindungsgemäßes Verfahren zur Kompensation einer kinematischen Abweichung eines Manipulatorsystems, das eine erste Teilkinematik (T_BS) mit wenigstens einem Freiheitsgrad (A1,...A6) und eine zweite Teilkinematik (T_IB) mit wenigstens einem Freiheitsgrad (A7) aufweist, durch die ein manipulatorfeste Referenz (S) relativ zu einem Inertialsystem (I) bewegbar ist, umfasst die Schritte:
(S10)
Erfassen wenigstens einer ersten Position (T_SK1-1, T_SK1-2,...) der manipulatorfesten Referenz (S) relativ zu einer ersten Kalibrierreferenz (K1), deren Referenzposition (T_BK1) relativ zu einer Basis (B) der ersten Teilkinematik von der zweiten Teilkinematik (T_IB) des Manipulatorsystems unabhängig ist; und
(S20)
Kalibrieren der ersten Teilkinematik (T_BS→ T_BS*) des Manipulatorsystems auf Basis der erfassten ersten Position (T_SK1-1, T_SK1-2,...) der manipulatorfesten Referenz (S).

Fig. 1

**Beschreibung**

Die vorliegende Erfindung betrifft ein Verfahren zur Kompensation einer kinematischen Abweichung, insbesondere einer Temperaturdrift, eines Manipulatorsystems sowie ein Manipulatorsystem zur Durchführung eines solchen Verfahrens.

Manipulatorsysteme, insbesondere mit Robotern wie heutigen Industrierobotern, sind in der Lage, vorgegebene Positionen mit hoher Positionier- und Wiederholgenauigkeit anzufahren, wobei als Position vorliegend insbesondere eine Lage und/oder eine Orientierung, beispielsweise im kartesischen Raum, bezeichnet wird. Hierzu umfassen sie eine Kinematik, die die Position einer Referenz, beispielsweise eines Arbeitspunktes oder TCPs ("Tool Center Point"), relativ zu einer Basis, beispielsweise einem Grundgestell des Roboters, bestimmt. Eine solche Kinematik kann beispielsweise durch die gelenkig miteinander verbundenen und motorisch gegeneinander bewegbaren Glieder eines Manipulatorsystems realisiert sein. Sie weist einen oder mehrere Freiheitsgrade auf, beispielsweise sechs Drehfreiheitsgrade eines Standart-Knickarmroboters, und kann durch eine Transformation zwischen einem basisfesten Koordinatensystem und einem Koordinatensystem in der Referenz, beispielsweise dem TCP-Koordinatensystem beschrieben werden, beispielsweise durch die Denavit-Hartenberg-Matrix, die Verdrehung und Verschiebung des Referenz- gegen das Basiskoordinatensystem in kartesischen oder Gelenkkoordinaten, Quaternionen oder dergleichen.

Im Betrieb verändert sich die Kinematik jedoch, beispielsweise durch Verschleiß in Getrieben oder Führungen, Elastizitäten, von dem Manipulatorsystem bewegte Lasten, insbesondere aber durch thermisch bedingte Formänderungen: durch die Abwärme von Antriebsmotoren, Arbeitsprozesse oder dergleichen können sich Abstände und Winkel zwischen den Gelenkpunkten des Manipulatorsystems gegenüber einer ursprünglichen Referenzkonfiguration verändern, so dass die tatsächliche Kinematik nicht mehr der Referenzkonfiguration entspricht, die bei einer Bahnplanung, einem Teachen eines Roboters oder dergleichen zugrundegelegt wurde. Dehnt sich beispielsweise ein Roboterarm aufgrund einer Erwärmung aus, verschiebt und/oder verdreht sich die Position des TCPs relativ zum Grundgestell.

Neben der Lösung, eine solche Temperaturdrift, i.e. eine thermisch bedingte Abweichung der Kinematik des Manipulatorsystems von einer Referenzkonfiguration, dadurch zu vermeiden, dass der Arbeitsbereich des Manipulatorsystems klimatisiert wird, ist es beispielsweise aus der WO 99/12082, und der DE 198 26 395 A1 bekannt, die Temperaturdrift durch eine (Re)Kalibrierung eines Roboters zu kompensieren. Hierbei wird die Position einer manipulatorfesten Referenz, beispielsweise eines Werkzeuges, zu einer inertial festen Kalibrierreferenz, beispielsweise einem oder mehreren Sensoren erfasst und die Kinematik so kalibriert, dass diese Position einer vorgegebenen Position, beispielsweise einer zuvor abgespeicherten Referenzposition entspricht. Die Kalibrierung kann dabei beispielsweise nach der DE 43 06 637 B4 durch Aufschalten einer Korrekturmatrix auf die Transformation zwischen einem basisfesten Koordinatensystem und einem Koordinatensystem in der Referenz oder nach der DE 101 53 049 B4 durch Adaption dieser Transformation erfolgen.

Bei den bekannten Verfahren wird stets die komplette Kinematik des Roboters kalibriert. Hierzu werden wenigstens so viele verschiedene nicht-singuläre Stellungen des Roboters angefahren und Positionen der manipulatorfesten Referenz erfasst, wie der Roboter Freiheitsgrade aufweist, zur Erhöhung der Zuverlässigkeit und Genauigkeit oftmals ein Vielfaches der Anzahl der Freiheitsgrade. Dieser Nachteil verschärft sich, wenn ein Manipulatorsystem mehr Freiheitsgrade aufweist, beispielsweise ein Manipulator mit sechs Freiheitsgraden auf einer Linearachse angeordnet wird. Wird hier eines der oben genannten Verfahren auf Basis einer inertial festen Kalibrierreferenz durchgeführt, müssen sieben Freiheitsgrade kalibriert werden, was nur unter Berücksichtigung weiterer Nebenbedingungen möglich ist.

Aufgabe der vorliegenden Erfindung ist es, die Kompensation einer kinematischen Abweichung, insbesondere einer Temperaturdrift, eines Manipulatorsystems zu verbessern.

Diese Aufgabe wird durch ein Verfahren mit den Merkmalen des Anspruchs 1 bzw. ein Manipulatorsystem mit den Merkmalen des Anspruchs 13 gelöst. Die Ansprüche 14, 15 stellen ein Computerprogramm bzw. ein Computerprogrammprodukt, insbesondere einen Datenträger bzw. ein Speichermedium zur Durchführung eines solchen Verfahrens unter Schutz, die Unteransprüche betreffen vorteilhafte Weiterbildungen.

Der Erfindung liegt im Wesentlichen die Idee zugrunde, eine Teil- oder Unterkinematik, die weniger Freiheitsgrade aufweist als das gesamte Manipulatorsystem, anhand einer Kalibrierreferenz zu kalibrieren, deren Position relativ zu einer Basis dieser Teilkinematik von der restlichen Kinematik des Manipulatorsystems unabhängig ist, also beispielsweise einen Manipulator mit sechs Freiheitsgraden anhand eines Kalibrierkörpers zu kalibrieren, der gemeinsam mit dem Manipulator auf einer Linearachse bewegbar ist, so dass seine Position relativ zu einem Grundgestellt des Manipulators konstant ist. Auf diese Weise muss die Linearachse bei der Temperaturdriftkompensation nicht berücksichtigt werden, so dass eine kinematische Abweichung des sechsachsigen Manipulators effizienter und/oder mit höherer Genauigkeit kompensiert werden kann.

Ein erfindungsgemäßes Verfahren eignet sich zur Kompensation verschiedener kinematischer Abweichungen, ist jedoch besonderes zur Kompensation einer Temperaturdrift geeignet und wird daher nachfolgend ohne Beschränkung der Allgemeinheit anhand einer Temperaturdriftkompensation eines sechsachsigen Manipulators näher erläutert, der auf einem Fahrwagen einer Linearachse angeordnet ist.

Ein solcher Manipulator bildet eine erste Teilkinematik mit sechs Freiheitsgraden A1,...A6 eines Manipulatorsystems, das zusätzlich mit dem Fahrwagen eine zweite Teilkinematik mit einem siebten Freiheitsgrad A7 aufweist. Beide Teil- oder Unterkinematiken definieren zusammen die Gesamtmenge von Freiheitsgraden A1,...A7 des Manipulatorsystems, in denen eine manipulatorfeste Referenz, beispielsweise ein TCP, ein Werkzeug oder ein Sensor, relativ zu einem Inertialsystem, beispielsweise einer Roboterzelle oder einer Fertigungsstraße, bewegbar ist. Ein Kalibrierkörper, beispielsweise eine Kalibrierkugel, die von einem Sensor am TCP des Manipulators erfassbar ist, oder ein Sensor zur Erfassung eines Werkzeuges des Manipulators, kann als eine erste Kalibrierreferenz zusammen mit dem Manipulator ortsfest auf dem Fahrwagen angeordnet sein, so dass ihre Position relativ zur Basis des Manipulators, i.e. ihre Referenzposition, von der Stellung des Fahrwagens unabhängig ist.

Der Manipulator kann durch die Transformation T_BS zwischen einem basisfesten Koordinatensystem B und einem Koordinatensystem S in der Referenz, beispielsweise dem TCP-Koordinatensystem beschrieben werden, die von den Gelenkkoordinaten A1,...A6 des Manipulators sowie seiner Geometrie, insbesondere seinen Gliedlängen und Achsstellungen abhängt:

$$T\_BS = T\_BS(A1,...A6) \qquad (1)$$

Der Index "_BS" zeigt dabei die Transformation von dem B- in das S-Koordinatensystem an. Entsprechend kann der Fahrwagen bzw. die zweite Teilkinematik, auf der die Basis B des Manipulators angeordnet ist, durch die Transformation

$$T\_IB = T\_IB(A7) \qquad (2)$$

von dem Inertialsystem I in das basisfesten Koordinatensystem B beschrieben werden.

Erfindungsgemäß werden eine oder mehrere verschiedene erste Positionen der manipulatorfesten Referenz relativ zu der ersten Kalibrierreferenz erfasst. Diese Positionen können durch die Transformation von der manipulatorfesten Referenz S in die Kalibrierreferenz K1 beschrieben werden, wobei verschiedene erste Positionen durch verschiedene Stellungen oder Posen des Manipulators realisiert werden können, i.e. durch unterschiedliche Gelenkwinkelsätze (A1-1,...A6-1), (A1-2,...A&-2),...

$$T\_SK1\text{-}j = T\_SK1(A1\text{-}j,...A6\text{-}j), \ j = 1, 2,... \qquad (3),$$

wobei der Index "j" die einzelnen Erfassungen bzw. Stellungen bezeichnet. Vorteilhafterweise werden wenigstens so viele nicht-singuläre erste Positionen erfasst wie die erste Teilkinematik Freiheitsgrade aufweist, insbesondere also wenigstens sechs unabhängige Stellungen oder Posen angefahren und jeweils die erste Position erfasst.

Eine Position kann beispielsweise dadurch erfasst werden, dass ein oder mehrere manipulatorfeste Sensoren, denen die manipulatorfeste Referenz zugeordnet ist, die Kalibrierreferenz erfassen, oder umgekehrt ein oder mehrere bezüglich der Kalibrierreferenz feste Sensoren, denen die Kalibrierreferenz zugeordnet ist, die manipulatorfeste Referenz erfassen. Auf dieser Basis, beispielsweise durch Triangulation mit durch die Sensoren erfasste Abstände, Auswertung von Auflichtaufnahmen oder dergleichen, kann dann die Position der manipulatorfesten Referenz relativ zu der Kalibrierreferenz, ermittelt werden, insbesondere die Transformation zwischen einem Koordinatensystem in der manipulatorfesten Referenz und einem Koordinatensystem in der Kalibrierreferenz.

Nun kann die erste Teilkinematik auf Basis dieser erfassten ersten Positionen der manipulatorfesten Referenz (re)kalibriert werden. Beispielsweise können die ersten Positionen mit Positionen verglichen werden, die in einem Ausgangs- oder Referenzzustand des Manipulators in denselben Stellungen erfasst wurde, und die erste Teilkinematik so kalibriert werden, dass die Differenz zwischen den nun erfassten ersten Positionen und den ersten Positionen im Ausgangszustand minimal wird, es kann also beispielsweise die Transformation T_BS korrigiert werden zu:

$$T\_BS^* = T\_BS(T\_SK1\text{-}1 - T\_SK1\_1', \ T\_SK1\text{-}2 - T\_SK1\_2',...) \qquad (4)$$

wobei der Index "*" die kalibrierte Teilkinematik beschreibt, der Index "'" die (gespeicherte) erste Position im Ausgangszustand. Die Korrekturfunktion T_BS(T_SK1-j - T_SK1_j') kann beispielsweise als Relation oder in Tabellenform hinterlegt sein. Gleichermaßen kann aus der kinematischen Kette

$$T\_BS \rightarrow T\_SK1 = T\_BK1 \quad (5),$$

i.e. der Transformation vom Basiskoordinatensystem B in die manipulatorfeste Referenz S und von dort in die erste Kalibrierreferenz K1 bzw. vom Basiskoordinatensystem B direkt in die erste Kalibrierreferenz K1, in an sich bekannter Weise die Transformation T_BS korrigiert werden, indem beispielsweise die Transformation T_BK1 vorab auf Basis eines Ausgangs- oder Referenzzustandes mit bekannter Transformation T_BS(A1',...A6') und in diesem Ausgangszustand erfassten Transformationen T_SK1' ermittelt und abgespeichert wird, so dass dann bei neuerlicher Erfassung der T_SK1 die Beziehung (5) nach der Transformation T_BS auflösbar ist. Die Korrektur der Transformation T_BS, durch die die erste Teilkinematik (re)kalibriert werden kann, kann beispielsweise durch Anpassung geometrischer Werte in einer Denavit-Hartenberg-Matrix, insbesondere durch Anpassung von Gliedlängen und Achsabständen, aber auch durch Vor- oder Nachschalten einer Korrekturfunktion erfolgen. Zusätzlich oder alternativ kann die erste Teilkinematik auch durch mechanische Eingriff, beispielsweise entsprechende Verkürzung oder Verlängerung von Achsabständen oderlagen, realisiert werden.

Wie vorstehend ausgeführt, ist in einer bevorzugten Ausführung die erste Kalibrierreferenz relativ zu der Basis der ersten Teilkinematik ortsfest, indem beispielsweise ein Kalibrierkörper oder ein Kalibriermuster zusammen mit einem Manipulator ortsfest auf einen Fahrschlitten einer Linearachse angeordnet ist. Dann ist der Term T_BK1 in obiger Beziehung (5) konstant. Wie sich aus den vorstehenden Erläuterungen ergibt, kann das Verfahren jedoch auch durchgeführt werden, wenn die erste Kalibrierreferenz relativ zu der Basis der ersten Teilkinematik eine, beispielsweise über der Zeit t, vorgegebene Bewegung ausführt, so dass gilt:

$$T\_BK1 = T\_BK1(t) \quad (6).$$

Denn auch dann ist die Beziehung (5) lösbar. So kann beispielsweise der Kalibrierkörper auf dem Fahrschlitten eine vorgegebene Bahn abfahren, um zur Erfassung oder zum Verfahren des Fahrschlittens besonders geeignete Referenzpositionen einzunehmen.

Vorzugsweise ist die erste Teilkinematik des Manipulatorsystems in einer oder mehreren, bevorzugt in allen erfassten ersten Positionen der manipulatorfesten Referenz eineindeutig oder bijektiv, so dass jeder erfassten ersten Position genau ein Gelenkkoordinatensatz zugeordnet werden kann:

$$(A1,...A6) \quad \leftrightarrow \quad [T\_BS(A1,...A6) \rightarrow T\_SK1(A1,...A6)] \quad (7)$$

$$\leftrightarrow \quad T\_BK1(A1,...A6) \quad (7a)$$

Die Position, i.e. die Lage und/oder Orientierung der manipulatorfesten Referenz relativ zu der ersten Kalibrierreferenz, weist maximal sechs Freiheitsgrade auf, drei Lage- und drei Drehfreiheitsgrade. Bevorzugt kann daher die erste Teilkinematik durch einen Manipulator mit maximal sechs Freiheitsgrade gebildet werden, die eindeutig kalibrierbar ist. Die Anwendung der einleitend erläuterten bekannten Verfahren mit inertial festen Kalibrierreferenzen bei einem sechsachsigen Roboter, der seinerseits auf einer siebten Linearachse bewegbar ist, würde demgegenüber dazu führen, dass nicht zwischen einer temperaturbedingten Drift im Roboter und einer - beispielsweise verschleiß- oder steuerungsabhängigen - Positionierungenauigkeit des Fahrwagens der Linearachse unterschieden werden kann.

In einer bevorzugten Ausführung kann auch die zweite Teilkinematik (re)kalibriert werden. Hierzu wird im Wesentlichen vorgeschlagen, diese Kalibrierung in an sich bekannter Weise auf Basis einer inertial festen zweiten Kalibrierreferenz durchzuführen, vorteilhafterweise nachdem die erste Teilkinematik wie vorstehend erläutert (re)kalibriert worden ist. Ist also beispielsweise die Temperaturdrift eines Manipulators auf einem Fahrwagen kompensiert, kann durch Erfassen einer Position eines inertial festen zweiten Kalibrierkörpers relativ zu der manipulatorfesten Referenz des kompensierten Manipulators auch die Linearachse (re)kalibriert werden.

Hierzu werden eine oder mehrere zweite Positionen der manipulatorfesten Referenz relativ zu einer zweiten Kalibrierreferenz erfasst, deren Position relativ zu dem Inertialsystem, i.e. deren Referenzposition bekannt, beispielsweise ortsfest oder, insbesondere über der Zeit, vorgegeben ist. Dann kann in ähnlicher Weise wie zuvor für die Kalibrierung der ersten Teilkinematik, die zweite Teilkinematik des Manipulatorsystems auf Basis dieser erfassten zweiten Positionen (re)kalibriert werden. Beispielsweise können die zweiten Positionen mit Positionen verglichen werden, die in einem Ausgangs- oder Referenzzustand von Manipulator und Fahrwagen in denselben Stellungen erfasst wurden, und die zweite Teilkinematik so kalibriert werden, dass die Differenz zwischen den nun erfassten zweiten Positionen und den zweiten Positionen im Ausgangszustand minimal wird, es kann also beispielsweise die Transformation T_IB korrigiert werden zu:

$$T\_IB^* = T\_IB(T\_SK2\text{-}1 - T\_SK2\_1', T\_SK2\text{-}2 - T\_SK2\_2', ...) \quad (8)$$

Gleichermaßen kann aus der kinematischen Kette

$$T\_IB \rightarrow T\_BS \rightarrow T\_SK2 = T\_IK2 \quad (9)$$

die Transformation T_IB korrigiert werden, wie dies vorstehend für die Beziehung (5) erläutert wurde, wobei vorteilhafterweise für die Transformation T_BS die Transformation T_BS* der wie vorstehend erläutert (re)kalibrierten ersten Kinematik verwendet wird.

Ist die zweite Teilkinematik während der Erfassen der ersten Positionen konstant, steht also beispielsweise ein Fahrwagen einer Linearachse, kann dies durch den Fahrwagen angeregte Schwingungen oder Erschütterungen vermeiden und so die Präzision der Kalibrierung der ersten Teilkinematik erhöhen. Das Erfassen der ersten Positionen kann jedoch auch erfolgen, während die zweite Teilkinematik eine vorgegebene Bewegung ausführt, beispielsweise der Fahrwagen verfährt, um die Verfahrzeit zur (Re)Kalibrierung zu nutzen.

Weitere Vorteile und Merkmale ergeben sich aus den Unteransprüchen und den Ausführungsbeispielen. Hierzu zeigt, teilweise schematisiert:

Fig. 1: ein Manipulatorsystem nach einer Ausführung der vorliegenden Erfindung; und

Fig. 2: den Ablauf eines Verfahrens nach einer Ausführung der vorliegenden Erfindung.

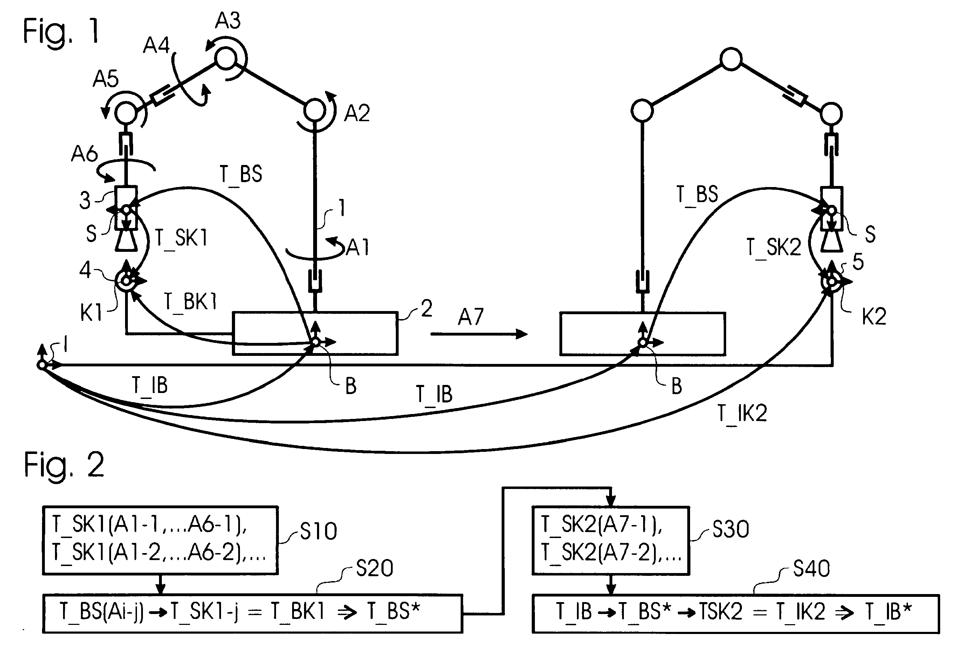

Fig. 1 zeigt ein Manipulatorsystem, das einen sechsachsigen Knickarmroboter 1 umfasst, der auf einem Fahrwagen 2 einer Linearachse angeordnet ist. Die sechs Freiheitsgrade des Roboters 1 werden durch seine Gelenkwinkel A1,...A6 beschrieben, A7 beschreibt die Verschiebung in der Linearachse.

Zusammen mit dem Roboter 1 und somit ortsfest bezüglich seines Grundgestells und der darin definierten Basis B ist eine erste Kalibrierkugel 4 als eine erste Kalibrierreferenz K1 auf dem Fahrwagen 2 angeordnet.

Der Roboter 1 trägt in seinem TCP einen optischen Sensor 3, durch den die Position einer manipulatorfesten Referenz S relativ zu der ersten Kalibrierreferenz K1 erfassbar ist, beispielsweise durch Auswertung eines auf die Kugel 4 aufgeleuchteten Musters.

Wie in Fig. 1 durch Pfeile angedeutet, wird ein Basis-Koordinatensystem B des Roboters 1, der eine erste Teilkinematik im Sinne der vorliegenden Erfindung bildet, durch die Transformation T_BS in das Koordinatensystem der manipulatorfesten Referenz S überführt, dieses durch die Transformation T_SK1 in das Koordinatensystem der ersten Kalibrierreferenz K1, in die das Basis-Koordinatensystem B alternativ auch durch die Transformation T_BK1 überführbar ist. Die Stellung des Roboters 1 und somit auch die Position des Sensors 3 relativ zu der ersten Kalibrierkugel 4 hängen von den Gelenkwinkeln A1,...A6 des Roboters 1 ab, die somit die erste Teilkinematik beschreiben.

Inertial fest ist eine zweite Kalibrierkugel 5 als eine zweite Kalibrierreferenz K2 vorgesehen, die in entsprechenden Stellungen von Roboter 1 und Fahrwagen 2, von denen eine exemplarisch rechts in Fig. 1 dargestellt ist, durch den optischen Sensor 3, erfassbar ist. Wiederum durch Pfeile angedeutet, wird ein Inertialsystem I durch die Transformation T_IB in das Basis-Koordinatensystem überführt, die somit eine zweite Teilkinematik im Sinne der vorliegenden Erfindung in Form des Fahrwagens 2 bzw. der Linearachse A7 beschreibt. Alternativ kann das Inertialsystem I durch die Transformation T_IK2 in das Koordinatensystem der zweiten Kalibrierreferenz K2 überführt werden.

Zur Temperaturkompensation dieses Manipulatorsystems werden nun einmalig vorab in einem Ausgangs- oder Referenzzustand in verschiedenen Stellungen von Roboter 1 und Fahrwagen 2 erste Positionen und zweite Positionen erfasst:

$$T\_SK1(A1\text{-}1',....A6\text{-}1'), \qquad T\_SK2(A1\text{-}1',....A6\text{-}1'),$$

$$T\_SK1(A1\text{-}2',....A6\text{-}2'), \qquad T\_SK2(A1\text{-}2',....A6\text{-}2'),...,$$

indem der optische Sensor 3 die Kugel 4 bzw. 5 erfasst und eine Auswerteeinheit hieraus die Positionen, i.e. die Lage und Orientierung des Sensors 3 relativ zu den Kugeln 4 bzw. 5 ermittelt. Auf Basis einer zugrundegelegten Ausgangs- oder Referenzkonfiguration des Manipulatorsystems, die durch die Transformationen T_BS'(A1,...A6), T_IB'(A7) beschrieben werden, können aus diesen erfassten ersten und zweiten Positionen nach den Beziehungen (5), (9) die Transformationen T_BK1, T_1K2 für die Referenzpositionen der ersten und zweiten Kalibrierreferenz ermittelt und abgespeichert werden. Alternativ können umgekehrt auch bei bekannten Referenzpositionen der ersten und zweiten Kalibierreferenz nach den Beziehungen (5), (9) die Transformationen T_BS', T_IB' für die Referenzkonfiguration ermittelt und das Manipulatorsystem so vorab kalibriert werden.

Soll nun das Manipulatorsystem, beispielsweise zur Kompensation einer Temperaturdrift des Roboters 1, rekalibriert werden, werden in einem Schritt S10 bei stehendem Fahrwagen 2 (links in Fig. 1) wiederum in verschiedenen Stellungen des Roboters 1 erste Positionen T_SK1-1 = T_SK1(A1-1,....A6-1), T_SK1-2 = T_SK1(A1-2,....A6-2)... des Sensors 3 relativ zu der ersten Kalibrierkugel 4 erfasst. Auf Basis dieser erfassten ersten Positionen und der abgespeicherten Transformation T_BK1 kann dann in einem Schritt S20 aufgrund der Beziehung (5) die Transformation T_BS* ermittelt werden, die die aktuelle Kinematik des Roboters 1 einschließlich deren temperaturbedingten Abweichungen von der Referenzkonfiguration beschreibt. Der Roboter 1 wird somit neu kalibriert. Indem man der Robotersteuerung bzw. -regelung die neue Transformation T_BS* zugrundelegt, wird seine Temperaturdrift kompensiert.

Anschließend wird der Fahrwagen 2 in der Linearachse in die in Fig. 1 rechte Position verfahren, um mit dem Sensor 2 in einem Schritt S30 bei nun wieder stehendem Fahrwagen 2 in verschiedenen Stellungen des Roboters 1 zweite Positionen T_SK2-1 = T_SK2(A1-1,....A6-1), T_SK2-2 = T_SK2(A1-2,....A6-2)... des Sensors 3 relativ zu der zweiten Kalibrierkugel 5 zu erfassen. Auf Basis dieser erfassten zweiten Positionen, der in Schritt S20 ermittelten Transformation T_BS* und der abgespeicherten Transformation T_IK2 kann dann in einem Schritt S40 aufgrund der Beziehung (9) die Transformation T_IB* ermittelt werden, die die aktuelle Kinematik des Fahrwagens 2 beschreibt. Somit wird das Manipulatorsystem mehrstufig neu kalibriert, indem man seiner Steuerung bzw. Regelung die neuen Transformationen T_BS*, T_IB* zugrundelegt.

Bezugszeichenliste

| | |
|---|---|
| 1 | Roboter |
| 2 | Fahrwagen |
| 3 | roboterfester optischer Sensor |
| 4 | erste Kalibrierkugel, fest auf Fahrwagen 2 |
| 5 | zweite Kalibrierkugel, inertial fest |
| A1,....A6 | Gelenkwinkel des Roboters 1 |
| A7 | Koordinate der Linearchse |
| B | Basiskoordinatensystem des Roboters 1 |
| K1, K2 | erste, zweite Kalibrierreferenz |
| S | roboterfeste Referenz |
| T_XY | Transformation vom Koordinatensystem X in Koordinatensystem Y |

**Patentansprüche**

1. Verfahren zur Kompensation einer kinematischen Abweichung, insbesondere einer Temperaturdrift, eines Manipulatorsystems, insbesondere eines Robotersystems, das eine erste Teilkinematik (T_BS) mit wenigstens einem Freiheitsgrad (A1 ,...A6) und eine zweite Teilkinematik (T_IB) mit wenigstens einem Freiheitsgrad (A7) aufweist, durch die eine manipulatorfeste Referenz (S) relativ zu einem Inertialsystem (1) bewegbar ist, mit den Schritten:

   (S10) Erfassen wenigstens einer ersten Position (T_SK1-1, T_SK1-2,...) der manipulatorfesten Referenz (S) relativ zu einer ersten Kalibrierreferenz (K1), deren Referenzposition (T_BK1) relativ zu einer Basis (B) der ersten Teilkinematik von der zweiten Teilkinematik (T_IB) des Manipulatorsystems unabhängig ist; und
   (S20) Kalibrieren der ersten Teilkinematik (T_BS → T_BS*) des Manipulatorsystems auf Basis der erfassten ersten Position (T_SK1-1, T_SK1-2,...) der manipulatorfesten Referenz (S).

2. Verfahren nach Anspruch 1, **dadurch gekennzeichnet, dass** die erste Kalibrierreferenz (K1) relativ zu der Basis (B) der ersten Teilkinematik (T_BS) des Manipulatorsystems ortsfest ist (T_BK1 = const) oder eine vorgegebene Bewegung ausführt (T_BK1 = T_BK1 (t)).

3. Verfahren nach einem der vorhergehenden Ansprüche, **dadurch gekennzeichnet, dass** die erste Teilkinematik (T_BS) des Manipulatorsystems in einer erfassten ersten Position (T_BS) der manipulatorfesten Referenz relativ zu der ersten Kalibrierreferenz eineindeutig ist ((A1-j,...A6-j) ↔ T_BS).

4. Verfahren nach einem der vorhergehenden Ansprüche, **dadurch gekennzeichnet, dass** die erste Teilkinematik (T_BS) des Manipulatorsystems durch einen Manipulator, insbesondere einen Roboter (1) gebildet ist, der sechs oder weniger Freiheitsgrade (A1,...A6) aufweist.

5. Verfahren nach einem der vorhergehenden Ansprüche, **gekennzeichnet durch** die Schritte:

   (S30) Erfassen wenigstens einer zweiten Position (T_SK2-1, T_SK2-2,...) der manipulatorfesten Referenz (S) relativ zu einer zweiten Kalibrierreferenz (K2), deren Referenzposition (T_IK2 = T_IB → T_BS* → TSK2-j) relativ zu dem Inertialsystem (I) bekannt ist; und
   (S40) Kalibieren der zweiten Teilkinematik (T_IB) des Manipulatorsystems auf Basis der erfassten zweiten Position (T_SK2-1, T_SK2-2,...) der manipulatorfesten Referenz.

6. Verfahren nach Anspruch 5, **dadurch gekennzeichnet, dass** die zweite Kalibrierreferenz (K2) relativ zu dem Inertialsystem (I) ortsfest ist (T_1K2 = const) oder eine vorgegebene Bewegung ausführt (T_IK2 = T_IK2(t)).

7. Verfahren nach einem der vorhergehenden Ansprüche 5 bis 6, **dadurch gekennzeichnet, dass** die erste und die zweite Teilkinematik zusammen die Gesamtmenge von Freiheitsgraden (A1,...A7) des Manipulatorsystems bilden.

8. Verfahren nach einem der vorhergehenden Ansprüche 5 bis 7, **dadurch gekennzeichnet, dass** die zweite Teilkinematik eine Linearachse eines Manipulators (1) umfasst.

9. Verfahren nach einem der vorhergehenden Ansprüche 5 bis 8, **dadurch gekennzeichnet, dass** die zweite Teilkinematik (T_IB) während der Erfassen einer ersten Position (T_SK1-1, T_SK1-2,...) der manipulatorfesten Referenz relativ zu der ersten Kalibrierreferenz (K1) konstant ist oder eine vorgegebene Bewegung ausführt, und/oder die erste Teilkinematik (T_BS) während der Erfassen einer zweiten Position (T_SK2-1, T_SK2-2,...) der manipulatorfesten Referenz relativ zu der zweiten Kalibrierreferenz (K2) konstant ist oder eine vorgegebene Bewegung ausführt.

10. Verfahren nach einem der vorhergehenden Ansprüche, **dadurch gekennzeichnet, dass** eine Position der manipulatorfesten Referenz (S) relativ zu einer Kalibrierreferenz (K1, K2) erfasst wird, indem

   (S10, S20) ein Sensor (3), dem die manipulatorfeste Referenz (S) zugeordnet ist, eine Relativposition (T_SK1, T_SK2) zu der Kalibrierreferenz (K1, K2) erfasst; und/oder ein Sensor, der in der Kalibrierreferenz angeordnet ist, eine Relativposition zu der manipulatorfesten Referenz erfasst.

11. Verfahren nach einem der vorhergehenden Ansprüche, **dadurch gekennzeichnet, dass** mehrere unterschiedliche Positionen (j) der manipulatorfesten Referenz (S) relativ zu einer Kalibrierreferenz (K1, K2) erfasst werden, und eine Teilkinematik des Manipulatorsystems auf Basis der unterschiedlichen erfassten Positionen (T_SK1-1, T_SK1-2,...), T_SK2-1, T_SK2-2,...) der manipulatorfesten Referenz kalibriert wird.

12. Verfahren nach einem der vorhergehenden Ansprüche, **dadurch gekennzeichnet, dass** die Kalibrierung der ersten und/oder zweiten Teilkinematik mehrfach, insbesondere periodisch, ausgeführt und auf Basis dieser Kalibrierungen einer Temperaturdrift kompensiert wird.

13. Manipulatorsystem, insbesondere Robotersystem, mit einem Manipulator (1), einer Bewegungseinrichtung (2) zur Bewegung einer Basis (B) des Manipulator (1), einer manipulatorfesten Referenz (S), die durch den Manipulator und die Bewegungseinrichtung relativ zu einem Inertialsystem (I) bewegbar ist, einer ersten Kalibrierreferenz (4), und einer Kompensationsvorrichtung zur Kompensation kinematischer Abweichungen, die zur Durchführung eines Verfahrens nach einem der vorhergehenden Ansprüche eingerichtet ist.

14. Computerprogramm, dass ein Verfahren nach einem der Ansprüche 1 bis 12 ausführt, wenn es in einer Kompensationsvorrichtung nach Anspruch 13 abläuft.

15. Computerprogrammprodukt mit Programmcode, der auf einem maschinenlesbaren Träger gespeichert ist und ein Computerprogramm nach Anspruch 14 umfasst.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9912082 A
- DE 19826395 A1
- DE 4306637 B4
- DE 10153049 B4